# EUROPEAN PATENT SPECIFICATION

(11) **EP 3 329 126 B1**
(45) Date of publication and mention of the grant of the patent: **24.03.2021**
(21) Application number: 16756826.0
(22) Date of filing: 25.07.2016
(51) Int. Cl.: F04D 15/00, F04D 27/02, F17D 1/14

(54) **BATCH CHANGE CONTROL FOR VARIABLE SPEED DRIVEN CENTRIFUGAL PUMPS AND PUMP SYSTEMS**
CHARGENWECHSELSTEUERUNG FÜR ANGETRIEBENE KREISELPUMPEN UND PUMPENSYSTEME MIT VARIABLER DREHZAHL
COMMANDE DE CHANGEMENT DE LOT POUR POMPES CENTRIFUGES À VITESSE VARIABLE ET SYSTÈMES DE POMPAGE

(30) Priority: 31.07.2015 US 201514814978
(43) Date of publication of application: 06.06.2018
(73) Proprietor: Siemens Energy Global GmbH & Co. KG, 81739 München (DE)
(72) Inventor: FOWLER, Edward A., Houston, Texas 77095 (US); KLÖPPNER, Gerd, 91083 Baiersdorf (DE); RHOTE-VANEY, Raphael, Novi, Michigan 48375 (US); SEENIRAJ, Ganesh Kumar, Landisville, PA 17538 (US)
(74) Representative: Isarpatent
(86) International application number: PCT/US2016/043845
(87) International publication number: WO 2017/023596

(56) References cited:
- US-A- 2 950 682
- US-A- 3 773 429
- US-A- 4 526 513
- US-A1- 2003 010 502

## Description

### BACKGROUND

### 1. Field

Aspects of the present invention generally relate to a method and systems for batch change control for variable speed-driven centrifugal pumps and pump systems.

### 2. Description of the Related Art

Pumps and pump systems are operated in applications for different media types, for example fluids, slurries, etc., and for different batches, generally in the process industry, and in particular in the oil and gas industry, for example pipelines, refineries, tank farms, etc. Typical oil pipelines transport batches of different types of oil. Such batches include light weight oils and heavy weight oils such as for example light crude oil, diluted bitumen oil, and synthetic crude oil with wide ranges of relative densities and viscosities. Batches can be of different products and of different grades of the same product. Batch changes can occur frequently as often as several times per day.

There are different methods used to separate oil batches, for example pig separation of batches, liquid slug separation of batches, and back-to-back batch changes. When using the back-to-back batch change method, no separation equipment such as for example utility pigs, is required. Three distinct volume areas exist in the pipeline when two oil batches, for example two product grades, are flowing. The new batch and the old batch have their own unique fluid properties. The volume between the new and old batches is called the interface; the interface volume represents a mixture of the new batch and the old batch with transient fluid properties (e.g. densities, viscosities). The length of the interface in the pipeline is shortest near the point of introduction of the new batch and longest at the delivery point. Flows and velocities of the different oil batches are kept at magnitudes sufficient to maintain turbulent flow in the pipeline. With adequate turbulence, minimum mixing of the product (interface) is accomplished.

But there are hydraulic and power disturbances when heavy-to-light and light-to-heavy interfaces move into centrifugal pumps. Thus, there exists a need to minimize hydraulic and power disturbances due to viscosity and/or density transients during batch changes in order to maintain economical and safe pump operation as well as mechanical and e.g. electrical integrity of the system, in particular to control pump speed and/or discharge pressure and/or flow rate and to control a pump station discharge pressure during batch changes.

Document US 2,950,682 A describes a method and an apparatus for safeguarding pipe-lines against an inadmissibly high internal compressive load by a control valve with a pneumatic drive. Document US 4,526,513 A describes a method and an apparatus for control of pipeline compressors. Document US 3,773,429 A describes means for pumping liquids in a pipeline Document US2003/010502 A discloses a feed-forward control system for a multi-phase flow booster compressor.

### SUMMARY

Briefly described, aspects of the present invention relate to a method and systems for batch change control for variable speed-driven centrifugal pumps and pump systems. Variable speed drives as disclosed herein includes electrical and mechanical assemblies (e.g. gear boxes, turbines).

A first aspect of the present invention provides a pump system according to claim 1.

A second aspect of the present invention provides a control system according to claim 5.

A third aspect of the present invention provides a method for controlling variable speed driven pumps or pump systems according to claim 8.

### BRIEF DESCRIPTION OF THE DRAWINGS

**FIG. 1** illustrates an example pump station which is not a part of the present invention.
**FIG. 2** illustrates a diagram illustrating transition of an operating point during a batch change in accordance with an exemplary embodiment of the present invention.
**FIG. 3** illustrates an example pump station of a pump system constructed in accordance with an exemplary embodiment of the present invention.
**FIG. 4** illustrates an example of a plug and play device for a pump and pump systems constructed in accordance with an exemplary embodiment of the present invention.
**FIG. 5** illustrates a flow chart of a method for controlling variable speed driven pumps or pump systems constructed in accordance with an exemplary embodiment of the present invention.

### DETAILED DESCRIPTION

In order to facilitate an understanding of embodiments, principles, and features of the present invention, these are explained hereinafter with reference to implementation in illustrative embodiments. In particular, these are described in the context of being methods and systems for a batch change control for variable speed driven centrifugal pumps and pump systems. Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention

The scope of the invention is solely defined by the appended claims.

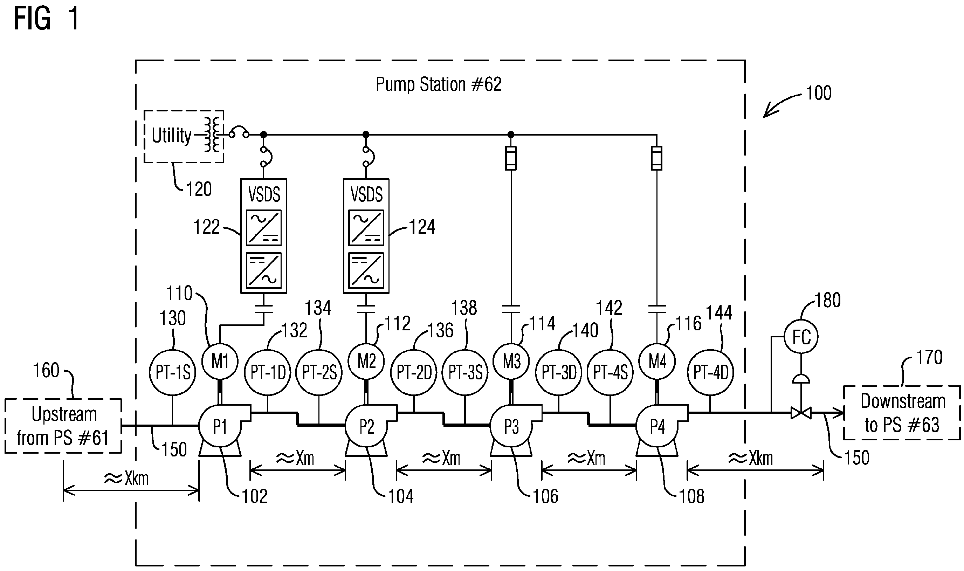

**FIG. 1** illustrates an example pump station which is not a part of the present invention.

The pump station **100** as illustrated in **FIG. 1** models a four-pump-in-series-station with pumps **102, 104, 106,** and **108,** also labelled as P1, P2, P3, and P4, for transporting a fluid, for example oil, along pipeline **150.** Many other media or fluids can be transported in the pipeline **150.** Each pump **102, 104, 106, 108** is driven by an electric motor, which are for example induction motors. Pump **102** is driven by pump motor **110,** also labelled M1, pump **104** is driven by pump motor **112** (M2), pump **106** is driven by pump motor **114** (M3), and pump **108** is driven by pump motor **116** (M4). For example, electrical power is supplied by power supply **120,** also referred to as utility. Likewise, power supply can be by generator. If required, electrical transformers transform incoming voltage to appropriate levels for the pump motors **110, 112, 114, 116.**

Pumps **102, 104, 106, 108** are each configured as a centrifugal pump. In this exemplary embodiment, the power for driving the pumps **102, 104, 106, 108** is provided directly by the electric pump motors **110, 112, 114, 116.**

Pumps **102, 104** are powered each by a variable speed drive, also referred to as Variable Speed Drive System (VSDS). Pump **102** is powered by VSDS **122,** and pump **104** is powered by VSDS **124.** The variable speed drives **122, 124** are used to control speed and torque of pump motors **110, 112.** In the exemplary embodiment according to **FIG. 1****,** each VSDS **122, 124** is operated with a fixed speed set point. Pumps **106, 108** are operated at a constant speed powered from the utility 120. Optionally, the pump station **100** can be equipped with a flow controller **180.**

Pumps **102** (P1) and **104** (P2), which are powered by VSDS **122** and **124,** are discharge pressure controlled using speeds of the motors **110** (M1) and **112** (M2). Thus, each pump **102, 104** comprises pressure transmitters **130, 132, 134, 136.** Pressure transmitters **130, 132** monitor pressure head of pump **102,** wherein pressure transmitter **130,** also labelled as PT-1S, is arranged upstream of pump **102** and pressure transmitter **132,** also labelled PT-1D, is arranged downstream of pump **102.** Transmitter **132** is operably connected to VSDS **122** in order to control the discharge pressure of pump **102** using the speed of motor **110.** As **FIG. 1** shows, each further pump **104, 106, 108** comprises at least two pressure transmitters **134** (PT-2S), **136** (PT-2D), **138** (PT-3S), **140** (PT-3D), **142** (PT-4S), **144** (PT-4D), wherein one pressure transmitter is arranged upstream of the pumps **104, 106, 108** and one pressure transmitter is arranged downstream of the pumps **104, 106, 108.** But such conventional pressure/speed controlling of the pumps **102, 104, 106, 108** is not able to control instantaneous changes in media densities and viscosities in case of batch changes. As a result, surges in flow and pressure occur and upstream/downstream operations are disrupted and integrity and safe operation of equipment and the pump station **100** is compromised.

The four centrifugal pumps **102, 104, 106** and **108** of pump station **100** are arranged in series. One of ordinary skill in the art appreciates that pump station **100** can comprise more or less than four pumps, for example only one pump or ten pumps. When pump station **100** comprises more than one pump, the pumps can be arranged in series and/or in parallel and/or a combination of both.

The pump station **100** further comprises field devices to measure and monitor relevant data and manipulate operation. Such field devices comprise for example flow, pressure and temperature gauges, sensors, transmitters. Pump station **100** can comprises pressure and temperatures gauges and transmitters installed along the pipeline **150** on specific locations. A supervisory control and data acquisition system, known as SCADA system, at a main control room receives all the field data and presents the data to pipeline operators through a set of screens or other type of human-machine-interface, displaying the operational conditions of the pipeline. The operator can monitor the hydraulic conditions of the line, as well as send operational commands (open/close valves, turn on/off compressors or pumps, change set points, etc.) through the SCADA system to the field. Exemplary embodiments of the present invention integrate into such an operational environment.

The pump station **100** is labelled as pump station #62 and is part of a pump system. A pump system can comprise one ore pump stations, such as for example pump station **100** as illustrated in **FIG. 1****.** As **FIG. 1** shows, pump station **100** (#62) is connected between pump station **160** (#61) and pump station **170** (#63), wherein pump station **160** is located upstream of pump station **100** and pump station **170** is located downstream of pump station **100.** Between the pump stations **100, 160** and **170** are distances of many kilometers. The distances between individual pump stations (X km) can vary, for example according to specific regional requirements. According to selected distances between pump stations, the number of individual pumps may need to be adjusted. For example, the longer the distance between pump stations, the more pumps at the pump station may be required in order to provide flow. Multiple pump stations, as for example pump stations **100, 160, 170,** of a pump system can be arranged in series or parallel or in a combination of both. The pump stations **100, 160, 170** as schematically shown in **FIG. 1** are arranged in series. Each pump of a pump system and/or each pump **102, 104, 106, 108** of a pump station such as pump station **100** can be either driven by a VSDS or can be powered directly by the utility **120,** also referred to as direct online type (DOL). Each of the pumps **102, 104, 106, 108** can be operated on/off. When DOL operation of pumps **102, 104, 106, 108** is required, pumps **102, 104, 106, 108** are typically started using VSDs **122** and/or **124** to accelerate a pump to rated speed then transfer power to utility **120** after which VSDs **122** and/or **124** is/are disconnected from the pump and made available for use by the other pumps. Distances between individual pumps **102, 104, 106, 108** (X m) can be equal or can be different.

As described before, there are different methods used to separate oil batches. When using the back-to-back batch change method, no separation equipment as such is required. Flows and velocities of the different oil batches are kept at magnitudes sufficient to maintain turbulent flow in the pipeline. With adequate turbulence, mixing of the product (interface) is kept at a minimum. But hydraulic and power disturbances start when heavy-to-light and light-to-heavy interfaces reach the inlet of a pump station.

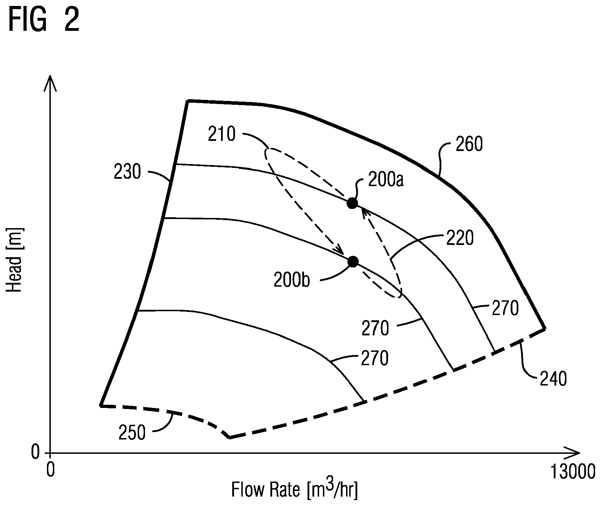

**FIG. 2** illustrates transition of an operating point during a batch change in accordance with an exemplary embodiment of the present invention.

During batch changes, behaviour of operating point **200a, 200b,** also referred to as invariant flow rate set point, of a pump station, as for example pump station **100** as shown in **FIG. 1** within pipeline **150,** is illustrated in **FIG. 2****.** High density and high viscosity media is defined as "heavy media". Low density and low viscosity media is defined as "light media". **FIG. 2** shows the transition of the operating point **200a, 200b** for a pump station without batch change control (refer to **FIG. 1****).**

Reference numeral **200a** labels an operating point for heavy fluid, and reference numeral **200b** labels an operating point for light fluid. The x-axis labels flow rate (m³/hr) of the fluid, and the y-axis labels total pump station head required (m), also referred to as total dynamic head (TDH).

Line **230** labels a minimum flow rate, and dotted line **240** labels a maximum flow rate of the fluid. Dotted curve **250** labels a minimum pump speed curve, and curve **260** labels a maximum pump speed curve, with different speed curves **270** in between. Pump curves are dependent on viscosity of the fluid and are corrected accordingly.

For example, during a batch change the flow rate is as follows:
a) In case of a batch change from heavy media to light media, the operation point **200a/b** is moving as per dotted line **210** from point **200a** to **200b.**
b) In case of a batch change from light media to heavy media, the operation point **200a/b** is moving as per dotted line **220** from point **200b** to **200a.**

The transition swings of the operation point **200a/b** in both cases a) and b) are the more extreme the larger the differences in density and viscosity between "heavy" and "light" are and the smaller the interface length of batch changes is. Fast changes in flow rate during transition can induce pressure surges in the pump system. Timely detection of a batch change interface in front of first pump of pump station **100** (refer to **FIG. 1****)** mitigates upsets, e.g. by means of processing the interface signals in feed forward control, and enables optimizing operation of the pump station **100** as well as of the pump system within actual operational limits and constraints.

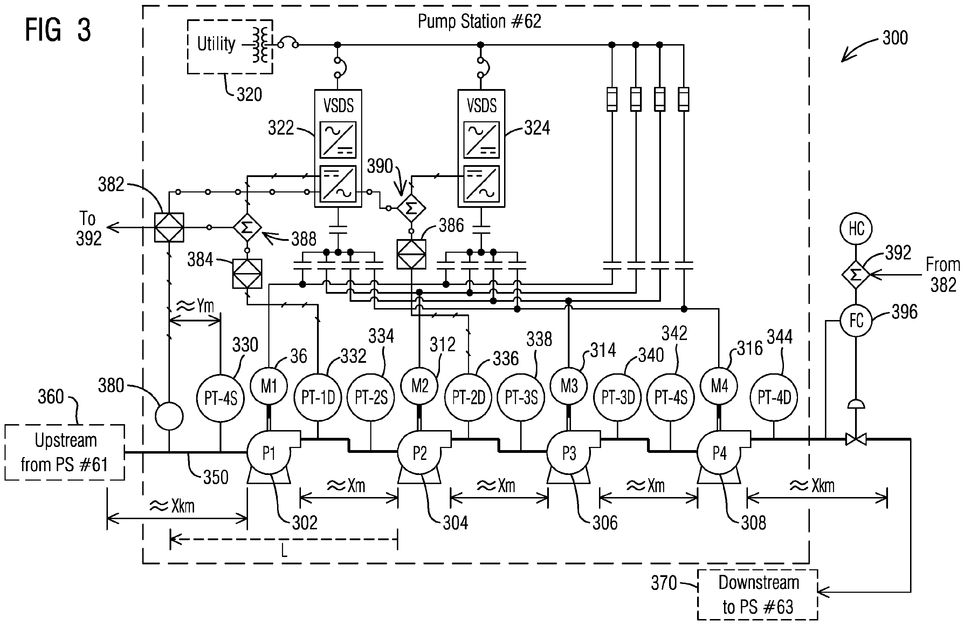

**FIG. 3** illustrates an example pump station of a pump system constructed in accordance with an exemplary embodiment of the present invention.

Similarly to the pump station **100** as illustrated in **FIG. 1****,** pump station **300** models a four-pump-in-series-station with centrifugal pumps **302, 304, 306,** and **308,** also labelled as P1, P2, P3, and P4, for transporting a fluid, for example oil, along pipeline **350.** Each pump **302, 304, 306, 308** is driven by e.g. an induction motor. Pump **302** is driven by pump motor **310,** also labelled M1, pump **304** is driven by pump motor **312** (M2), pump **306** is driven by pump motor **314** (M3), and pump **308** is driven by pump motor **316** (M4). Electrical power is supplied by power supply **320,** also referred to as utility.

The pump station **300** is labelled as pump station #62 and is part of a pump system. A pump system can comprise one ore pump stations, such as for example pump station **300.** As **FIG. 3** shows, pump station **300** (#62) is connected between pump station **360** (#61) and pump station **370** (#63), wherein pump station **360** is located upstream of pump station **300** and pump station **370** is located downstream of pump station **300.** Between the pump stations **300, 360** and **370** are distances of many kilometers (X km). The distances between individual pump stations can vary, for example according to specific regional requirements. According to selected distances between pump stations, the number of individual pumps may need to be adjusted. For example, the longer the distance between pump stations, the more pumps at the pump station may be required in order to provide flow. Multiple pump stations, as for example pump stations **300, 360, 370,** of a pump system can be arranged in series or parallel or in a combination of both. The pump stations **300, 360, 370** as schematically illustrated in **FIG. 3** are arranged in series. Distances between individual pumps **302, 304, 306, 308** (X m) can be equal or can be different.

As illustrated in **FIG. 3****,** pump station **300** comprises Variable Speed Drive Systems (VSDS) **322, 324.** All pumps **302, 304, 306, 308** of the pump station **300** are powered by VSDSs **322, 324** via the pump motors **310, 312, 314, 316.** The pump station **300** comprises two or more than two VSDSs. The variable speed drives **322, 324** are used to control speed and torque of pump motors **310, 312, 314, 316.** As **FIG. 3** shows, each pump **302, 304, 306, 306** is operably coupled to both the VSDS **322** and the VSDS **324.** Each of the pumps **302, 304, 306, 308** can be operated on/off. Furthermore, some pumps and pump stations within a configuration can be switched-off/on according to pipeline operation requirements.

On the contrary to the exemplary embodiment according to **FIG. 1****,** the exemplary embodiment according to **FIG. 3** models, according to the invention, a feed forward controlled pump station **300** with controlling the pumps **302, 304, 306, 308** along with the pump motors **310, 312, 314, 316.** Pump station **300** comprises a control system with control loops for controlling the pumps **302, 304, 306, 308** in particular during batch changes.

Timely detection of a batch change interface in front of pump station **300** mitigates upsets and enables optimizing operation of the pump station **300** as well as of the pump system. According to an exemplary embodiment of the invention, pump station **300** comprises a control system in order to minimize hydraulic and power disturbance due to density and viscosity transients during batch changes and in order to maintain economical and safe pump operation as well as mechanical and e.g. electrical integrity of the pump station **300** and the pump system, in particular to maintain a constant flow rate and to manage a pump station discharge pressure during batch changes. The control system includes logic, which may be implemented in hardware, software, or a combination thereof.

Each variable speed driven pump among pumps **302, 304, 306, 308** comprises respective suction pressure transmitters **330, 334, 338, 342** and discharge pressure controllers **332, 336, 340, 344,** which monitor and control the discharge pressure of a respective pump **302, 304, 306, 308.** The pumps of the pump station **300** are variable speed driven and discharge pressure controlled, wherein one pressure transmitter is arranged upstream of the pumps and one pressure controller is arranged downstream of the pumps. For example, variable speed driven centrifugal pump **302** can comprise pressure transmitter **330** (PT-1S), pressure controller **332** (PT-1D), variable speed driven centrifugal pump **302** can comprise pressure transmitter **334** (PT-2S), pressure controller **336** (PT-2D), variable speed driven centrifugal pump **306** can comprise pressure transmitter **338** (PT-3S), pressure controller **340** (PT-3D), and variable speed driven centrifugal pump **308** can comprise pressure transmitter **342** (PT-4S), pressure controller **344** (PT-4D). The exemplary pump station **300** is designed so that all pumps **302, 304, 306, 308** have closed loop discharge pressure controllers e.g. **384, 386** Feed forward control during batch change shall take place on variable speed driven pumps within the pump assembly. VSDSs **322, 324** can drive any pump **302, 304, 306, 308** and when driving a specific pump, the respective pressure controller is assigned to that specific pump and operably coupled to VSDSs **322, 324** so that discharge pressure control is achieved for any pump driven by a VSDS.

Fast and accurate measurement of the properties of the fluid transported in pipeline **350** is prerequisite for a fast acting control system in order to predict interface during a batch change in first pump **302** at the pump station **300.** Issues caused by delayed fluid property measurements are avoided by using e.g. a multivariable clamp-on interface detection instrument **380** with sufficient sampling at rates such as five times per second. The instrument **380** can be for example a clamp-on transit-time ultrasonic meter. Such an ultrasonic meter is for example a device named SITRANS FUH1010® manufactured by Siemens. The instrument **380** ensures precise and timely sampling of flow rate, density and viscosity by sensoring sonic velocities and temperature of the media in the pipeline **350.** The pump station **300** can comprise one or a plurality of interface detection meters **380** installed at desired locations along the pipeline **350.** Typically, a pump station comprises at least one interface meter **380** installed in front of first pump **302** of the pump station **300.** The optimal location of the interface meter **380** downstream of pump station **360** and upstream of pump station **300** depends on the feed forward control requirements (refer to pump suction **L)**.

The control system encompasses comprehensive control loops including sensors, transmitters, logic software, actuators and electrical supply and analogue/digital signal interfaces. In general, logic software applications calculate (e.g. based on sensor readings, plant condition data, and system design data) the optimal transition of pump operating points from start to end of a batch change. The results are implemented to override basic control parameters and set points of the pump station.

The pump station **300** comprises feed forward logic in order to supplement or override basic control commands and/or data of the pump station **300,** and feed back control loops comprising a plurality of logic controllers **382, 384, 386.** Logic control **382** is operably coupled between interface detection instrument **380** VSDSs **322, 324,** and flow controller **396,** also labelled FC. Logic control **382** comprises feed-forward control functionality in order to supplement or override basic control commands of the pump station **300.** Models applied include batch detection application, viscosity corrected pump curves, ultrasonic signal compensation, etc. and overriding set points and/or controller parameter of VSDS controls **388, 390** and/or flow controller **396,** and/or discharge controller, e.g. **384, 386.**

The interface detection instrument **380** provides sonic velocities and temperature of the fluid in the pipeline **350.** In an exemplary embodiment, the interface detection instrument **380** can be configured such that it also determines and/or calculates flow rate and/or density and/or viscosity of the fluid in the pipeline **350.** Alternatively, viscosity and/or density can be calculated in logic control **382** instead of being provided by the interface detection instrument **380.** The logic control **382** controls the VSDSs **322, 324** and/or flow controller **396** by adjusting the speed set points and/or control parameter of each VSDS **322, 324,** and/or set point and control parameter of pressure controls e.g. **384, 386,** and/or set point and control parameter of flow controller **396** according to the properties, in particular viscosity and/or density, of the fluid in the pipeline **350** based on viscosity corrected pump curves of pertinent pumps. Other examples for an interface detection instrument **380** are viscosity meters and/or density meters or many other meters capable of providing viscosity and/or density information of a fluid in timely manner

Pump station **300** further comprises logic controls e.g. **384, 386,** and/or **396,** wherein each logic control **384, 386, 396** comprises logic functionality, for example a PID controller. In the event of a batch change, manipulated variables (output) and/or control parameters and/or set points of these controllers **384, 386,** and/or **396** are overridden by control logic **382.** After the batch change, these logic controllers **384, 386, 396** are re-started accordingly and the control logic **382** is set idle.

Pump station **300** further comprises logic controls e.g. **388,** e.g. **390, 392.** These logic controls e.g. **388,** e.g. **390, 392** override logic controls e.g. **384, 386** and/or the set point of logic control **396** by means of results/output of logic control **382,** if applicable during a batch change.

Based on information relating to density and/or viscosity of the fluid in the pipeline, the logic control **382** detects timely batch changes. During a batch change, the logic control **382** predicts optimal pump and pump system operation based on design limits and actual operational data and constraints (e.g. including electro-mechanical system data) and/or actual viscosity corrected pump curves (refer to **FIG. 2****)** and overrides speed settings for VSDSs **322, 324** and/or parameter of pressure logic controls **384, 386,** and/or set points of flow controller **396.** Once a batch change is accomplished, pressure/speed logic controls e.g. **384, 386** and/or flow control logic **396** is/are re-activated accordingly.

In further exemplary embodiments, the logic control **382** calculates the speed set points for VSDSs **322, 324** and/or set points and parameters of discharge pressure controllers e.g. **384, 386,** and/or set points for flow controller **396** derived dynamically from a multi-dimensional system of equations or lookup tables based on viscosity corrected pump system curves, design limits, actual operational constraints and conditions of pump and pump system (e.g. including electro-mechanical systems). The calculated speed and/or discharge pressure control parameter and/or set points and/or flow rate set points are functions of multiple variables, for example:
- Fluid density and viscosity, compressibility factors,
- Volumetric flow rate,
- Crude assays and pump curves,
- Pressure and temperature of fluid,
- Suction/discharge pressure of pumps and pumps systems,
- Batch interface length, and
- Theoretical and calculated actual pump efficiencies.

As noted before, each of the pumps **302, 304, 306, 308** can be operated on/off. For example, according to flow rate of fluid in pipeline **350** and discharge pressure of pumps **302, 304, 306, 308,** one or more of the pumps may be switched off because the flow rate and discharge pressure is such that not all of the pumps are needed. When the flow rate and discharge pressure requirements increase, the pumps can be switched on again.

The control logic of the control system comprises at least the following functionalities:
- Detecting batch changes by logic control **382.**
- Logic control **382** overrides signals and/or parameter of logic controls e.g. **384,** e.g. **386, 396.** This may include e.g. time lag, ramping, scaling, controller parameters, set points
- Overriding the set points of pump system controls (e.g. pump system discharge pressure control, pump system suction control, pump system flow control) depending on interface transient change in properties and period time of interface transient.
- Real-time sensor readings shall be processed, e.g. sample times of about 200 ms, including compressibility factors of media (refer to interface detection instrument **380).**
- Pump curves, e.g. total pump head = f (flow, speed, viscosity), shall be continuously updated (refer to for example **FIG. 2****)** depending on actual pump condition monitoring and known corrections for viscosity, density, impeller, max. shaft power, etc. Actual pump curves are applied for pump station operation and optimization, if applicable. Actual pump efficiencies and/or maintenance information is applied in order to decide on optimal pump configurations (e.g. pump on/off).
- Based on actual pump conditions and batch interface information as well as operational constraints (e.g. pump on/off, minimum pump flows, choke flows, min/max speeds, max electrical current, availability and actual condition of mechanical, electrical and instrumentation loop devices and equipment), the optimized transient towards the new steady-state operation of pump station can be calculated and implement into the basic controls (speed control, discharge/suction control, flow control) of the control system by means of for example model-based or model-predictive process control logic.
- Depending on actual feasibility and requirements steady-state modeling (ODE, ordinary differential equation), dynamic modeling (PDE, partial differential equation), mixed integer modeling, fuzzy logic, stochastic/empirical modeling and artificial neural networks are applicable. Hybrid modeling of above-mentioned (e.g. dynamic modeling with artificial neural network modules etc.) is also included.

Essentially, the control system of pump station **300** monitors the flow rate of the fluid in the pipeline **350** as well as density and viscosity of the fluid in real time. A fluid interface of a batch change can be detected and speed set points for the VSDSs **322, 324** and/or set points and parameters for discharge pressure controls e.g. **384, 386** are automatically adapted when the fluid interface enters each pump **302, 304, 306, 308** of the pump station **300.** The control system also calculates correct station pressure set points for at least pumps **302, 304,** and discharge pressure controllers e.g. **384, 386** and/or flow controller **396** for non-batch change conditions. The control system mitigates the transient effects on the hydraulic and power systems when batch changes occur, in particular when batch changes with oil viscosity changes occur. The control system as described in **FIG. 3** employs high speed product monitoring, for example density, pressure, temperature and viscosity (refer to interface detection instrument **380)** and control algorithms implemented in one or more of logic controls **382, 384, 386, 392,** and other devices to attenuate magnitudes of disturbances during batch changes.

The control circuit as illustrated in **FIG. 3** attenuates the operation paths **210, 220** (refer to **FIG. 2****).** By reducing (or increasing) the speed set points of VSDSs **322, 324,** and/or discharge pressure control **384, 386,** and/or flow control **396** synchronized with the position of the interface, pressure and flow are maintained. The speed set points of VSDSs **322, 324** are adjusted as the new batch of fluid travels downstream the pipe **350** in order to maintain a flow rate according to the downstream pressure requirements. The control circuit as illustrated in **FIG. 3** prevents the operating point **200a, 200b** (refer to **FIG. 2****)** from shifting from **200a** to **200b** along paths 210, 220; instead the control system allows operating point 200b to move to operating point 200a (and vice versa) almost vertically to maintain flow and control discharge pressures.

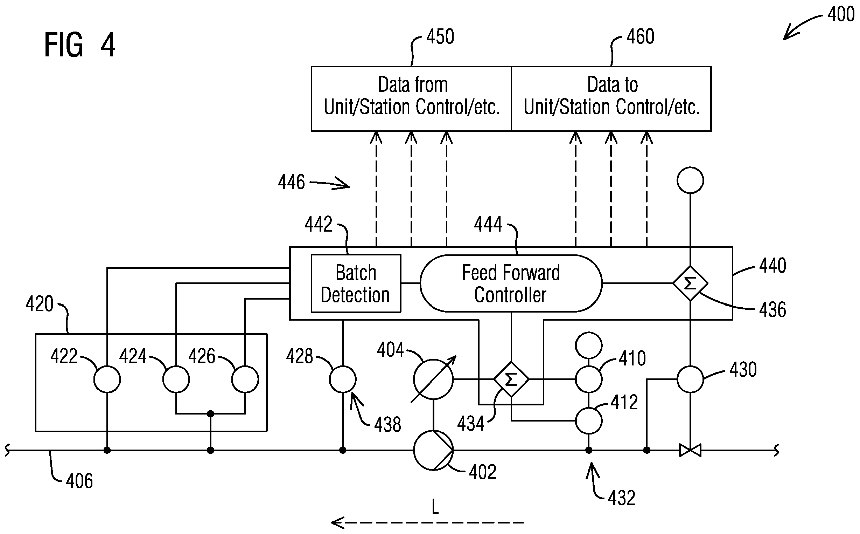

**FIG. 4** illustrates an example of a plug-and-play device for a pump and pump systems constructed in accordance with an exemplary embodiment of the present invention.

The described control system can be integrated into new pump stations or pump system when being installed (refer to for example **FIG. 3****),** referred to as Greenfield projects, or can be installed as plug-and-play system as retrofit application into existing infrastructure, referred to as Brownfield projects.

**FIG. 4** illustrates a section of a pump system **400** which comprises one variable speed driven pump **402,** one variable speed drive system (VSDS) **404,** discharge pressure-speed control **410,** interface detection meter **420** and/or flow controller **430,** and pipeline assembly **406** transporting fluid. Plug-and-play device **440** comprising feed forward batch change controller **444** is integrated into the pump system **400** which is an existing system configuration, i.e. Brownfield project, via data and signal interfaces **446.** Plug-and-play device **440** interfaces to plant and other outside system data import **450** and data export **460** of the pump system **400** via interfaces **446.** In doing so, a set of further controllers of different types, for example at further pumps, can be coordinated and aligned with the plug-and-play device **440.**

Plug-and-play device **440** processes pump suction information such as for example fluid temperature **422,** fluid density **426,** fluid flow rate **424** provided by interface detection meter **420** and suction pressure information **428** provided by pressure transmitter **438,** as well as pump discharge information **410, 412** provided by pressure transmitter **432** and/or flow controller **430.** Pump system **400** further comprises logic controls **434, 436,** which override existing logic control **410** and/or set points of logic control **430** by means of results/output of logic control of feed forward controller **444,** if applicable during batch change detection **442.**

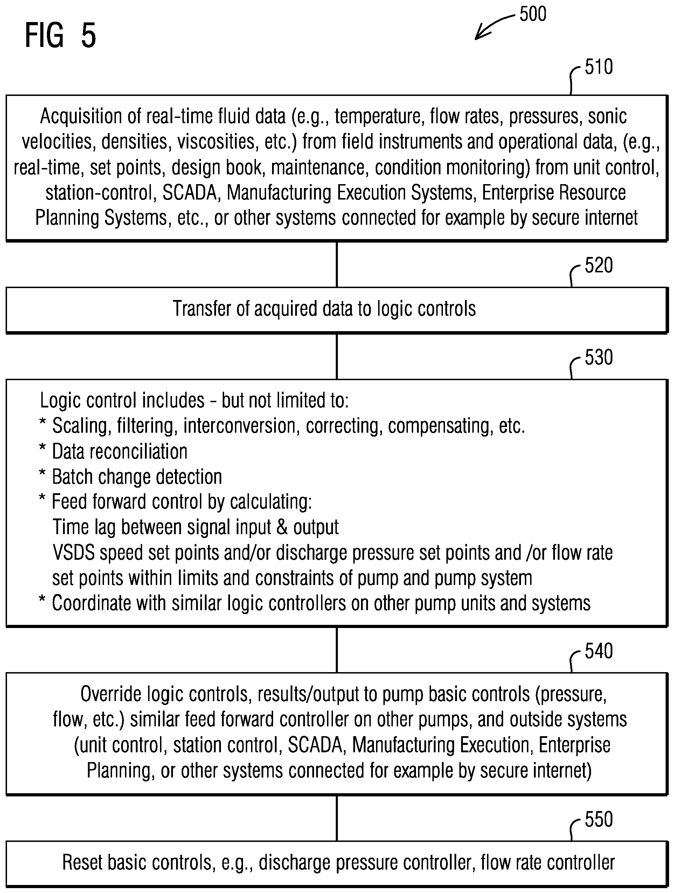

**FIG. 5** illustrates a flow chart of a method **500** for controlling variable speed driven pumps or pump systems, as described for example in **FIG. 3** and **FIG. 4****,** constructed in accordance with an exemplary embodiment of the present invention.

Step **510** of method **500** comprises acquisition of real-time fluid data (e.g. temperatures, flow rates, pressures, sonic velocities, densities, viscosities, etc.) from field instruments and operational data (e.g. real-time, set points, design book, maintenance, condition monitoring) from unit control, station control, SCADA, Manufacturing Execution Systems, Enterprise Resource Planning Systems, etc., or other systems connected for example by secure internet. In step **520,** acquired data are transferred to logic controls of a pump station or pump system. The logic controls include, but are not limited to (see step **530):**
- Scaling, filtering, inter-conversion, correcting, compensating, etc.,
- Data reconciliation,
- Batch change detection,
- Feed forward control by calculating,
   + Time lag between signal input & output,
   + VSDS speed set points and/or discharge pressure set points and/or flow rate set points within limits and constraints of pump and pump system,
- Coordinating with similar logic controllers on other pump units and systems.

Step **540** includes forwarding and overriding the results/output of the logic controls (refer to steps **520, 530)** of the pump station or pump system to pump basic controls (pressure, flow, etc.), and forwarding and overriding results/output of feed forward controller to other pumps and outside systems (for example unit control, station control, SCADA, Manufacturing Execution, Enterprise Planning, or other systems connected for example by secure internet). In step **550,** when a batch change is over, basic pump controls, e.g. discharge pressure controller and/or flow rate controller are reset.

The proposed control system optimizes by means of logic application (mathematical algorithm) based on plant, design data (incl. viscosity corrections of pump curves) the transition upsets of operations, minimizes the transition time and maintains safe pump and plant operation by processing timely interface sensor signals in order to predict new operation set points and control parameters, as well as optimal path of transient operation. This includes switching discrete pumps on/off and adjusting speed of pumps as well as overriding, ramping set points and control parameters of basic controls, if applicable. The mathematical algorithm includes -but is not limited to- algebraic equations, ordinary differential equations, partial differential equations, mixed integer equations, and a combination thereof.

The described control system can be integrated into new pump stations 300 or pump system when being installed, referred to as so called Greenfield projects, or can be installed as plug-and-play system as retrofit application into existing infrastructure, referred to as so called Brownfield projects.

## Claims

1. A pump system comprising:
a pipeline assembly (350) for transporting fluid;
a pump assembly comprising a plurality of pumps (302, 304, 306, 308) arranged along the pipeline assembly (350);
a pump motor assembly comprising a plurality of pump motors (310, 312, 314, 316) driving the plurality of pumps (302, 304, 306, 308) of the pump assembly;
a control assembly (382, 384, 386, 388, 390, 392, 396) for controlling speed of the pump motors (310, 312, 314, 316) and discharge pressure and flow rate of the pumps (302, 304, 306, 308); and
at least one interface detection meter (380) in communication with the pipeline assembly (350), the interface detection meter (380) determining properties of the fluid in the pipeline assembly (350), and the control assembly (382, 384, 386, 388, 390, 392, 396) controlling the speeds and the discharge pressures according to the properties determined of the fluid in the pipeline assembly (350),
wherein the control assembly (382, 384, 386, 388, 390, 392, 396) is configured to transmit data of the properties of the fluid and calculates speed set points and discharge pressure set points,
wherein the control assembly (382, 384, 386, 388, 390, 392, 396) comprises a first logic control (382) comprising feed-forward control logic for transmitting the data of the properties of the fluid,
wherein the control assembly (382, 384, 386, 388, 390, 392, 396) is configured to detect a fluid interface of a batch change of the fluid transported in the pipeline assembly (350) and to automatically adjust the speed set points and discharge pressure set points in a continuous manner when the fluid interface travels through the pipeline assembly (350), and
wherein the at least one interface detection meter (380) is configured as a transit-time ultrasonic meter.

2. The pump system of Claim 1, wherein the control assembly (382, 384, 386, 388, 390, 392, 396) comprises second logic control and third logic controls (384, 386, 396) comprising PID control logic for calculating the speed set points and/or the discharge pressure set points and/or flow rate set points.

3. The pump system of Claim 1, wherein the pump assembly comprises a plurality of centrifugal pumps (302, 304, 306, 308) arranged in series, parallel or a combination thereof.

4. The pump system of Claim 1, further comprising:
variable speed drive systems (VSDS) (322, 324) operably coupled to the plurality of pump motors (310, 312, 314, 316) of the pump motor assembly.

5. A control system comprising:
at least one interface detection meter (380) in communication with a pipeline assembly (350) for transporting fluid;
a drive assembly (322, 324) controlling speed of pump motors (310, 312, 314, 316) powering pumps (302, 304, 306, 308) in communication with the pipeline assembly (350) for transporting the fluid; and
a feed forward control assembly (382, 384, 386, 388, 390, 392, 396) controlling pump speeds and discharge pressures of the pumps (302, 304, 306, 308),
wherein a first logic control (382) of the control assembly receives fluid data of the fluid in the pipeline assembly (350) provided by the at least one interface detection meter (380), and forwards the fluid data to a second logic control (384, 386) for calculating speed set points and discharge pressure set points for the feed forward control assembly (382, 384, 386, 388, 390, 392, 396),
wherein the control assembly (382, 384, 386, 388, 390, 392, 396) is configured to detect a fluid interface of a batch change of the fluid transported in the pipeline assembly (350) and to automatically adjust the speed set points and discharge pressure set points in a continuous manner when the fluid interface travels through the pipeline assembly (350), and
wherein the at least one interface detection meter (380) is configured as a transit-time ultrasonic meter.

6. The control system of Claim 5, wherein the speed set points and discharge pressure set points are calculated based upon the fluid data and pump performance data programmed in the first or second logic control (382, 384, 386).

7. The control system of Claim 6, wherein the fluid data and pump performance data are selected from a group consisting of fluid density, fluid viscosity, volumetric fluid flow rate, fluid velocity, fluid pressure, fluid temperature, fluid crude assays, pump performance curves, suction pressure of pump, discharge pressure of pump, and a combination thereof.

8. A method (500) for controlling variable speed driven pumps or pump systems comprising:
acquiring (510) real-time fluid data by field instruments of a fluid travelling through a pipeline assembly (350), and acquiring (510) operational data of a pump system by different units of the pump system, the pump system being operably coupled to the pipeline assembly (350);
transferring (520) acquired fluid data and operational data to logic controls (382, 384, 386, 388, 390, 392, 396) of the pump system;
processing (530) the acquired fluid data and operational data by the logic controls (382, 384, 386, 388, 390, 392, 396);
overriding (540) basic pump controls of the pump system based on results provided by the logic controls (382, 384, 386, 388, 390, 392, 396) after the processing of the acquired fluid data and operational data; and
resetting (550) the basic pump controls,
wherein the fluid data are acquired using at least one interface detection meter (380) in communication with the pipeline assembly (350), the at least one interface detection meter (380) being configured as a transit-time ultrasonic meter,
wherein the basic pump controls comprise speed set points, discharge pressure set points and flow set points;
wherein the control assembly (382, 384, 386, 388, 390, 392, 396) transmits data of the properties of the fluid and calculates speed set points and discharge pressure set points,
wherein the control assembly (382, 384, 386, 388, 390, 392, 396) comprises a first logic control (382) comprising feed-forward control logic which transmits the data of the properties of the fluid, and
wherein the control assembly (382, 384, 386, 388, 390, 392, 396) detects a fluid interface of a batch change of the fluid transported in the pipeline assembly (350) and automatically adjusts the speed set points and discharge pressure set points in a continuous manner when the fluid interface travels through the pipeline assembly (350).

9. The method (500) of Claim 8, wherein the acquiring (510) of the real-time fluid data comprises measuring first fluid data and calculating second fluid data, wherein the first fluid data comprise at least volumetric flow rate and velocity of the fluid, and wherein the second fluid data comprise at least density and viscosity of the fluid.

10. The method (500) of Claim 8, wherein the processing (530) of the acquired fluid data and operational data includes calculating the speed set points and discharge pressure set points by the logic controls (382, 384, 386 388, 390, 392, 396).

11. The method (500) of Claim 10, further comprising:
automatically adjusting the speed set points and discharge pressure set points of a pump unit (302, 304, 306, 308, 310, 312, 314 316) based upon calculations by the logic controls (382, 384, 386, 388, 390, 392, 396).

12. The method (500) of Claim 8, wherein the basic pump controls are reset after a batch change of the fluid travelling in the pipe assembly (350) has been detected and has passed pump units (302, 304, 306, 308, 310, 312, 314, 316) of the pump system.

## Patentansprüche

1. Pumpensystem, umfassend:
eine Rohrleitungsanordnung (350) zum Transportieren von Fluid;
eine Pumpenanordnung, umfassend eine Vielzahl von Pumpen (302, 304, 306, 308), die entlang der Rohrleitungsanordnung (350) angeordnet sind;
eine Pumpenmotoranordnung, umfassend eine Vielzahl von Pumpenmotoren (310, 312, 314, 316), die die Vielzahl von Pumpen (302, 304, 306, 308) der Pumpenanordnung antreiben;
eine Steuerungsanordnung (382, 384, 386, 388, 390, 392, 396) zum Steuern der Drehzahl der Pumpenmotoren (310, 312, 314, 316) und des Förderdrucks und der Durchflussmenge der Pumpen (302, 304, 306, 308); und
mindestens ein Trennschichterkennungsmesser (380) in Kommunikation mit der Rohrleitungsanordnung (350), wobei der Trennschichterkennungsmesser (380) Eigenschaften des Fluids in der Rohrleitungsanordnung (350) bestimmt, und die Steuerungsanordnung (382, 384, 386, 388, 390, 392, 396) die Drehzahlen und die Förderdrücke gemäß den bestimmten Eigenschaften des Fluids in der Rohrleitungsanordnung (350) steuert,
wobei die Steuerungsanordnung (382, 384, 386, 388, 390, 392, 396) dazu ausgelegt ist, Daten über die Eigenschaften des Fluids zu übertragen und Drehzahlsollwerte und Förderdrucksollwerte berechnet,
wobei die Steuerungsanordnung (382, 384, 386, 388, 390, 392, 396) eine erste Logiksteuerung (382) umfasst, die eine Vorwärtssteuerungslogik zum Übertragen der Daten der Eigenschaften des Fluids umfasst,
wobei die Steuerungsanordnung (382, 384, 386, 388, 390, 392, 396) dazu ausgelegt ist, eine Fluidtrennschicht eines Chargenwechsels des in der Rohrleitungsanordnung (350) transportierten Fluids zu erkennen und die Drehzahlsollwerte und Förderdrucksollwerte kontinuierlich automatisch anzupassen, wenn sich die Fluidtrennschicht durch die Rohrleitungsanordnung (350) bewegt, und
wobei der mindestens eine Trennschichterkennungsmesser (380) als Laufzeitultraschallmessgerät ausgelegt ist.

2. Pumpensystem gemäß Anspruch 1, wobei die Steuerungsanordnung (382, 384, 386, 388, 390, 392, 396) eine zweite Logiksteuerung und eine dritte Logiksteuerung (384, 386, 396) umfasst, die eine PID-Steuerungslogik zum Berechnen der Drehzahlsollwerte und/oder der Förderdrucksollwerte und/oder der Durchflussmengensollwerte umfasst.

3. Pumpensystem gemäß Anspruch 1, wobei die Pumpenanordnung eine Vielzahl von Kreiselpumpen (302, 304, 306, 308) umfasst, die in Reihe, parallel oder in einer Kombination davon angeordnet sind.

4. Pumpensystem gemäß Anspruch 1, ferner umfassend:
Antriebssysteme mit variabler Drehzahl (VSDS) (322, 324), die betriebsfähig mit der Vielzahl von Pumpenmotoren (310, 312, 314, 316) der Pumpenmotoranordnung gekoppelt sind.

5. Steuerungssystem, umfassend:
mindestens einen Trennschichterkennungsmesser (380) in Kommunikation mit einer Rohrleitungsanordnung (350) zum Transportieren von Fluid;
eine Antriebsanordnung (322, 324), die die Drehzahl von Pumpenmotoren (310, 312, 314, 316) steuert, die Pumpen (302, 304, 306, 308) in Kommunikation mit der Rohrleitungsanordnung (350) zum Transportieren des Fluids antreiben; und
eine Vorwärtssteuerungsanordnung (382, 384, 386, 388, 390, 392, 396), die Pumpendrehzahlen und Förderdrücke der Pumpen (302, 304, 306, 308) steuert,
wobei eine erste Logiksteuerung (382) der Steuerungsanordnung Fluiddaten des Fluids in der Rohrleitungsanordnung (350) empfängt, die durch den mindestens einen Trennschichterkennungsmesser (380) bereitgestellt werden, und die Fluiddaten an eine zweite Logiksteuerung (384, 386) zum Berechnen von Drehzahlsollwerten und Förderdrucksollwerten für die Vorwärtssteuerungsanordnung (382, 384, 386, 388, 390, 392, 396) weiterleitet,
wobei die Steuerungsanordnung (382, 384, 386, 388, 390, 392, 396) dazu ausgelegt ist, eine Fluidtrennschicht eines Chargenwechsels des in der Rohrleitungsanordnung (350) transportierten Fluids zu erkennen und die Drehzahlsollwerte und Förderdrucksollwerte kontinuierlich automatisch anzupassen, wenn sich die Fluidtrennschicht durch die Rohrleitungsanordnung (350) bewegt, und
wobei der mindestens eine Trennschichterkennungsmesser (380) als Laufzeitultraschallmessgerät ausgelegt ist.

6. Steuerungssystem gemäß Anspruch 5, wobei die Drehzahlsollwerte und die Förderdrucksollwerte basierend auf den in der ersten oder zweiten Logiksteuerung (382, 384, 386) programmierten Fluiddaten und Pumpenleistungsdaten berechnet werden.

7. Steuerungssystem gemäß Anspruch 6, wobei die Fluiddaten und Pumpenleistungsdaten aus einer Gruppe ausgewählt werden, die aus Fluiddichte, Fluidviskosität, volumetrischer Fluiddurchflussmenge, Fluidgeschwindigkeit, Fluiddruck, Fluidtemperatur, Fluidrohproben, Pumpenleistungskurven, Saugdruck der Pumpe, Förderdruck der Pumpe und einer Kombination davon besteht.

8. Verfahren (500) zum Steuern von Pumpen oder Pumpensystemen mit variabler Drehzahl, umfassend:
Erfassen (510) von Echtzeitfluiddaten durch Feldinstrumente eines Fluids, das durch eine Rohrleitungsanordnung (350) fließt, und Erfassen (510) von Betriebsdaten eines Pumpensystems durch verschiedene Einheiten des Pumpensystems, wobei das Pumpensystem betriebsfähig mit der Rohrleitungsanordnung (350) gekoppelt ist;
Übertragen (520) von erfassten Fluiddaten und Betriebsdaten an Logiksteuerungen (382, 384, 386, 388, 390, 392, 396) des Pumpensystems;
Verarbeiten (530) der erfassten Fluiddaten und Betriebsdaten durch die Logiksteuerungen (382, 384, 386, 388, 390, 392, 396);
Übersteuern (540) grundlegender Pumpensteuerungen des Pumpensystems basierend auf Ergebnissen, die durch die Logiksteuerungen (382, 384, 386, 388, 390, 392, 396) nach dem Verarbeiten der erfassten Fluiddaten und Betriebsdaten bereitgestellt werden; und
Zurücksetzen (550) der grundlegenden Pumpensteuerungen,
wobei die Fluiddaten unter Verwendung von mindestens einem Trennschichterkennungsmesser (380) in Kommunikation mit der Rohrleitungsanordnung (350) erfasst werden, wobei der mindestens eine Trennschichterkennungsmesser (380) als ein Laufzeitultraschallmessgerät ausgelegt ist,
wobei die grundlegenden Pumpensteuerungen Drehzahlsollwerte, Förderdrucksollwerte und Durchflusssollwerte umfassen;
wobei die Steuerungsanordnung (382, 384, 386, 388, 390, 392, 396) Daten über die Eigenschaften des Fluids überträgt und Drehzahlsollwerte und Förderdrucksollwerte berechnet,
wobei die Steuerungsanordnung (382, 384, 386, 388, 390, 392, 396) eine erste Logiksteuerung (382) umfasst, die eine Vorwärtssteuerungslogik umfasst, die die Daten der Eigenschaften des Fluids überträgt, und
wobei die Steuerungsanordnung (382, 384, 386, 388, 390, 392, 396), eine Fluidtrennschicht eines Chargenwechsels des in der Rohrleitungsanordnung (350) transportierten Fluids erkennt und die Drehzahlsollwerte und Förderdrucksollwerte kontinuierlich automatisch anpasst, wenn sich die Fluidtrennschicht durch die Rohrleitungsanordnung (350) bewegt.

9. Verfahren (500) gemäß Anspruch 8, wobei das Erfassen (510) der Echtzeitfluiddaten das Messen erster Fluiddaten und das Berechnen zweiter Fluiddaten umfasst, wobei die ersten Fluiddaten mindestens eine volumetrische Durchflussmenge und Geschwindigkeit des Fluids umfassen, und wobei die zweiten Fluiddaten mindestens eine Dichte und Viskosität des Fluids umfassen.

10. Verfahren (500) gemäß Anspruch 8, wobei das Verarbeiten (530) der erfassten Fluiddaten und Betriebsdaten das Berechnen der Drehzahlsollwerte und der Förderdrucksollwerte durch die Logiksteuerungen (382, 384, 386, 388, 390, 392, 396) beinhaltet.

11. Verfahren (500) gemäß Anspruch 10, ferner umfassend:
automatisches Anpassen der Drehzahlsollwerte und Förderdrucksollwerte einer Pumpeneinheit (302, 304, 306, 308, 310, 312, 314, 316) basierend auf Berechnungen durch die Logiksteuerungen (382, 384, 386, 388, 390, 392, 396).

12. Verfahren (500) gemäß Anspruch 8, wobei die grundlegenden Pumpensteuerungen zurückgesetzt werden, nachdem ein Chargenwechsel des in der Rohrleitungsanordnung (350) fließenden Fluids erkannt worden ist und Pumpeneinheiten (302, 304, 306, 308, 310, 312, 314, 316) des Pumpensystems passiert hat.

## Revendications

1. Système de pompes, comprenant :
un ensemble de canalisations (350) destiné à transporter un fluide ;
un ensemble de pompes comprenant une pluralité de pompes (302, 304, 306, 308) agencées le long de l'ensemble de canalisations (350) ;
un ensemble de moteurs de pompe comprenant une pluralité de moteurs de pompe (310, 312, 314, 316) entraînant la pluralité de pompes (302, 304, 306, 308) de l'ensemble de pompes ;
un ensemble de commande (382, 384, 386, 388, 390, 392, 396) destiné à commander une vitesse des moteurs de pompe (310, 312, 314, 316) et une pression de refoulement et le débit des pompes (302, 304, 306, 308) ; et
au moins un compteur de détection d'interface (380) en communication avec l'ensemble de canalisations (350), le compteur de détection d'interface (380) déterminant des propriétés du fluide dans l'ensemble de canalisations (350) et l'ensemble de commande (382, 384, 386, 388, 390, 392, 396) commandant les vitesses et les pressions de refoulement selon les propriétés déterminées du fluide dans l'ensemble de canalisations (350),
l'ensemble de commande (382, 384, 386, 388, 390, 392, 396) étant configuré pour transmettre des données des propriétés du fluide et calculant des consignes de vitesse et des consignes de pression de refoulement,
l'ensemble de commande (382, 384, 386, 388, 390, 392, 396) comprenant une première commande logique (382) comprenant une logique de commande par anticipation destinée à transmettre les données des propriétés du fluide,
l'ensemble de commande (382, 384, 386, 388, 390, 392, 396) étant configuré pour détecter une interface de fluide d'un changement de charge discontinue du fluide transporté dans l'ensemble de canalisations (350) et pour ajuster automatiquement les consignes de vitesse et les consignes de pression de refoulement de manière continue lorsque l'interface de fluide se propage à travers l'ensemble de canalisations (350), et
l'au moins un compteur de détection d'interface (380) étant configuré comme un compteur de temps de parcours à ultrasons.

2. Système de pompes selon la revendication 1, dans lequel l'ensemble de commande (382, 384, 386, 388, 390, 392, 396) comprend une deuxième commande logique et des troisièmes commandes logiques (384, 386, 396) comprenant une logique de commande PID destinée à calculer les consignes de vitesse et/ou les consignes de pression de refoulement et/ou des consignes de débit.

3. Système de pompes selon la revendication 1, dans lequel l'ensemble de pompes comprend une pluralité de pompes centrifuges (302, 304, 306, 308) agencées en série, parallèle ou une combinaison de celles-ci.

4. Système de pompes selon la revendication 1, comprenant en outre :
des variateurs de vitesse (VSDS) (322, 324) accouplés fonctionnellement à la pluralité de moteurs de pompe (310, 312, 314, 316) de l'ensemble de moteurs de pompe.

5. Système de commande, comprenant :
au moins un compteur de détection d'interface (380) en communication avec un ensemble de canalisations (350) destiné à transporter un fluide ;
un ensemble d'entraînement (322, 324) commandant la vitesse de moteurs de pompe (310, 312, 314, 316) actionnant des pompes (302, 304, 306, 308) en communication avec l'ensemble de canalisations (350) destiné à transporter le fluide ; et
un ensemble de commande par anticipation (382, 384, 386, 388, 390, 392, 396) commandant des vitesses de pompe et des pressions de refoulement des pompes (302, 304, 306, 308),
une première commande logique (382) de l'ensemble de commande recevant des données de fluide du fluide dans l'ensemble de canalisations (350) fournies par l'au moins un compteur de détection d'interface (380) et retransmettant les données de fluide à une deuxième commande logique (384, 386) destinée à calculer des consignes de vitesse et des consignes de pression de refoulement pour l'ensemble de commande par anticipation (382, 384, 386, 388, 390, 392, 396),
l'ensemble de commande (382, 384, 386, 388, 390, 392, 396) étant configuré pour détecter une interface de fluide d'un changement de charge discontinue du fluide transporté dans l'ensemble de canalisations (350) et pour ajuster automatiquement les consignes de vitesse et les consignes de pression de refoulement de manière continue lorsque l'interface de fluide se propage à travers l'ensemble de canalisations (350), et
l'au moins un compteur de détection d'interface (380) étant configuré comme un compteur de temps de parcours à ultrasons.

6. Système de commande selon la revendication 5, dans lequel les consignes de vitesse et les consignes de pression de refoulement sont calculées en fonction des données de fluide et de données de performance de pompe programmées dans la première ou la deuxième commande logique (382, 384, 386).

7. Système de commande selon la revendication 6, dans lequel les données de fluide et les données de performance de pompe sont sélectionnées dans un groupe constitué par une densité de fluide, une viscosité de fluide, un débit volumétrique de fluide, une vitesse de fluide, une température de fluide, des titrages de brut de fluide, des courbes de performance de pompe, une pression d'aspiration de pompe, une pression de refoulement de pompe et une combinaison de ceux-ci.

8. Procédé (500) de commande de pompes ou de systèmes de pompes entraînés par vitesse variable, comprenant :
l'acquisition (510) de données de fluide en temps réel par des instruments de terrain d'un fluide se propageant à travers un ensemble de canalisations (350), et l'acquisition (510) de données d'exploitation d'un système de pompes par différentes unités du système de pompes, le système de pompes étant accouplé fonctionnellement à l'ensemble de canalisations (350) ;
le transfert (520) de données de fluide et de données d'exploitation acquises à des commandes logiques (382, 384, 386, 388, 390, 392, 396) du système de pompes ;
le traitement (530) des données de fluide et des données d'exploitation acquises par les commandes logiques (382, 384, 386, 388, 390, 392, 396) ;
la dérogation (540) à des commandes de pompe de base du système de pompes en fonction de résultats fournis par les commandes logiques (382, 384, 386, 388, 390, 392, 396) suite au traitement des données de fluide et des données d'exploitation acquises ; et
la réinitialisation (550) des commandes de pompe de base,
les données de fluide étant acquises au moyen d'au moins un compteur de détection d'interface (380) en communication avec l'ensemble de canalisations (350), l'au moins un compteur de détection d'interface (380) étant configuré comme un compteur de temps de parcours à ultrasons,
les commandes de pompe de base comprenant des consignes de vitesse, des consignes de pression de refoulement et des consignes d'écoulement ;
l'ensemble de commande (382, 384, 386, 388, 390, 392, 396) transmettant des données des propriétés du fluide et calculant des consignes de vitesse et des consignes de pression de refoulement,
l'ensemble de commande (382, 384, 386, 388, 390, 392, 396) comprenant une première commande logique (382) comprenant une logique de commande par anticipation qui transmet les données des propriétés du fluide, et
l'ensemble de commande (382, 384, 386, 388, 390, 392, 396) détectant une interface de fluide d'un changement de charge discontinue du fluide transporté dans l'ensemble de canalisations (350) et ajustant automatiquement les consignes de vitesse et les consignes de pression de refoulement de manière continue lorsque l'interface de fluide se propage à travers l'ensemble de canalisations (350).

9. Procédé (500) selon la revendication 8, dans lequel l'acquisition (510) des données de fluide en temps réel comprend la mesure des premières données de fluide et le calcul de deuxièmes données de fluide, les premières données de fluide comprenant au moins un débit volumétrique et une vitesse du fluide, et les deuxièmes données de fluide comprenant au moins une densité et une viscosité du fluide.

10. Procédé (500) selon la revendication 8, dans lequel le traitement (530) des données de fluide et des données d'exploitation acquises comporte le calcul des consignes de vitesse et des consignes de pression de refoulement par les commandes logiques (382, 384, 386, 388, 390, 392, 396).

11. Procédé (500) selon la revendication 10, comprenant en outre :
l'ajustement automatique des consignes de vitesse et des consignes de pression de refoulement d'une unité pompe (302, 304, 306, 308, 310, 312, 314, 316) en fonction de calculs par les commandes logiques (382, 384, 386, 388, 390, 392, 396).

12. Procédé (500) selon la revendication 8, dans lequel les commandes de pompe de base sont réinitialisées suite à la détection d'un changement de charge discontinue du fluide se propageant dans l'ensemble de canalisations (350) et à son passage par les unités pompes (302, 304, 306, 308, 310, 312, 314, 316) du système de pompes.
